# EUROPÄISCHE PATENTSCHRIFT

(11) **EP 0 694 729 B1**
(45) Veröffentlichungstag und Bekanntmachung des Hinweises auf die Patenterteilung: **30.09.1998**
(21) Anmeldenummer: 95109767.4
(22) Anmeldetag: 23.06.1995
(51) Int. Cl.: F22B 1/16, F28F 13/18, F28D 9/00

(54) **Verdampfereinheit**
Vaporizing unit
Module de vaporisation

(30) Priorität: 28.07.1994 DE 4426692
(43) Veröffentlichungstag der Anmeldung: 31.01.1996
(73) Patentinhaber: DBB Fuel Cell Engines Gesellschaft mit beschränkter Haftung, 73230 Kirchheim/Teck-Nabern (DE)
(72) Erfinder: Waitkat, Peter, Dipl.-Ing., D-78579 Neuhausen (DE); Benz, Uwe, Dipl.-Ing., D-88690 Uhldingen (DE); Einhart, Johann, Dipl.-Phys., D-88690 Uhldingen (DE)
(74) Vertreter: Kocher, Klaus-Peter

(56) Entgegenhaltungen:
- EP-A- 0 175 216
- EP-A- 0 546 947
- EP-A- 0 578 218
- WO-A-94/04870
- GB-A- 2 076 304
- US-A- 5 316 870

## Beschreibung

Die Erfindung betrifft eine zweistufige Verdampfereinheit zum Überführen eines in Abhängigkeit einer Lastvorgabe einstellbaren flüssigen Reaktand-Massenstroms in einen gasförmigen Reaktand-Massenstrom gemäß dem Oberbegriff des Patentanspruchs 1.

Aus der US-PS 52 49 624 ist ein zweistufiger, zylindrischer Verdampfer bekannt, mit dessen Hilfe ein lastabhängig vorgegebener flüssiger Reaktand-Massenstrom in einen gasförmigen Reaktand-Massenstrom durch Zufuhr von Wärmeenergie überführt werden kann. Die erste Stufe wird gebildet durch Rippen, die derart auf einen Grundblock angeordnet sind, daß sich eine Vielzahl von Reaktionskanälen ausbilden. Die Reaktionskanäle sind mit Abstand von einer am Umfang des Verdampfers angeordneten Einlaßdüse angeordnet und erstrecken sich sternförmig in radialer Richtung zur Einlaßdüse. Die zweite Stufe ist auf der Rückseite des Grundblocks als mäanderförmiger Kanal ausgebildet.

Diese Anordnung weist zwar gegenüber herkömmlichen Verdampfern, beispielsweise Fallfilm, Rohrbündel- oder plattenverdampfer, ein verringertes in der Anordnung befindliches Flüssigkeitsvolumen und damit ein verbessertes dynamisches Verhalten auf. Allerdings ist der hierfür benötigte Bauraum noch relativ groß.

Aus der DE-OS 41 37 756 ist außerdem ein Mikrowärmetauscher in Kreuzstrombauweise bekannt, der aus aufeinandergestapelten, plattenförmigen Folien, die eine Vielzahl sehr feiner, parallel verlaufender Nuten aufweisen, besteht, wobei aufeinanderfolgende Folien zur Ausbildung von Reaktionskanälen beziehungsweise Wärmeträgerkanälen jeweils um 90° gedreht angeordnet sind. Das Einbringen der feinen Nuten erfolgt über ein Drehverfahren. Der Folienstapel wird dann in ein Gehäuse, das jeweils einen Einlaß- und einen Auslaßstutzen aufweist, eingeschweißt.

Diese Anordnung hat allerdings aufgrund des großen Flüssigkeitsvolumens, das durch die Einlaß- und Auslaßstutzen, die sich jeweils über eine komplette Seitenfläche des Folienstapels erstrecken, gebildet wird, ein unbefriedigendes dynamisches Verhalten. Außerdem ist diese Anordnung nur als Wärmetauscher konzipiert, eine zweite Stufe zur vollständigen Verdampfung und Überhitzung des Reaktand-Massenstroms ist nicht vorgesehen. Der Nachteil des verwendeten Herstellungsverfahrens durch spanende Bearbeitung besteht darin, daß nur gerade Kanäle konstanten Querschnitts eingebracht werden können. Sollen die Stoffströme in den Zu- und Abströmleitungen sauber getrennt werden, so kommt nur eine Kreuzstrombauweise in Frage, was jedoch wiederum die Energieausnutzung einschränkt. Außerdem weist diese Anordnung eine große Vorkammer auf, wodurch die Dynamik der Anordnung erheblich verschlechtert wird. So kann selbst bei Null-Durchsatz durch das unerwünschte Verdampfen der Vorkammerflüssigkeit auf der Abströmseite Dampf produziert werden. Schließlich ist dieses Herstellungsverfahren bedingt durch die hohen Werkzeugkosten und den hohen Werkzeugverschleiß sehr teuer.

Weiterhin ist aus der EP 546 947 A1 ein gattungsgemäßer Plattenverdampfer bekannt, bei dem ein gasförmiges und ein flüssiges Medium derart in Wärmekontakt gebracht werden, daß das gasförmige Medium kondensiert und das flüssige Medium verdampft wird. Ausgehend von einer Zuführung erstrecken sich eine vielzahl parallelel Kanäle, die im Gegenstrom zum gasförmigen Medium geführt sind und deren Querschnittsfläche in Strömungsrichtung leicht zunimmt. Eine deutliche Zunahme der Querschnittsfläche von der Zuführung zum eigentlichen Wärmeaustauschbereich ist jedoch nicht vorgesehen. Außerdem ist im Bereich der Zuführung wiederum ein relativ großes Volumen vorgesehen, so daß auch hier keine ausreichende Dynamik erreicht werden kann.

Die Aufgabe der Erfindung besteht darin, einen Verdampfer mit verbesserter Dynamik bei gleichzeitiger Reduzierung des benötigten Bauvolumens zu schaffen.

Die Aufgabe wird erfindungsgemäß durch die kennzeichnenden Merkmale des Patentanspruchs 1 gelöst.

Durch die Ausbildung der ersten Stufe als Kanal mit minimierter Querschnittsfläche wird das freie Volumen in der Verdampfereinheit verringert und dadurch die Dynamik stark verbessert. Durch die Verwendung von Reaktionskanälen mit geringer Querschnittsfläche können hohe Wärmeübergangszahlen realisiert und dadurch die benötigte Austauschfläche reduziert werden.

Zusätzlich bringt die Verwendung sehr dünner Folien eine Erhöhung der Austauschfläche pro Volumeneinheit, so daß die verdampfereinheit die Forderung nach Kompaktheit und Dynamik besonders gut erfüllt.

Der zweistufige Ansatz bringt den Vorteil, daß die Geometrie jeder Stufe hinsichtlich Druckverlust, Wärmeübertragungseigenschaften und Dynamik optimiert werden kann. Werden die Kanäle mit Hilfe eines Ätzverfahrens hergestellt, so kommt der weitere Vorteil hinzu, daß die Kanäle hinsichtlich Strömungsführung und Querschnittsfläche sehr variabel gestaltet werden können. Insbesondere den Strömungsverhältnissen aufgrund der starken Volumenvergrößerung beim Verdampfen kann durch eine Erweiterung des Querschnitts pro Kanal und/oder durch eine Erhöhung der Kanalzahl in Strömungsrichtung Rechnung getragen werden.

Weiterhin ist es aufgrund der Ätztechnik möglich, zur besseren Energieausnutzung und zur Erzeugung höherer Austrittstemperaturen des Dampfes eine Verdampfereinheit in Gegenstrombauart herzustellen, wobei der Reaktand-Massenstrom zusätzlich noch im Eingangsbereich quer zu den Wärmeträgerkanälen geführt werden kann. Durch die Verwendung von Verteiler- und Sammelkanälen können schließlich die Zu- und Abströmkanäle kleiner ausgeführt und auf weniger als vier Seiten, bestenfalls sogar auf nur einer Seite der Verdampfereinheit angeordnet werden.

Weitere Vorteile und Ausgestaltungen gehen aus den Unteransprüchen und der Beschreibung hervor. Die Erfindung ist nachstehend anhand einer Prinzipzeichnung näher beschrieben, wobei
- Fig. 1: ein erstes Ausführungsbeispiel einer Vorrichtung zum Verdampfen eines Reaktand-Massenstroms,
- Fig. 2: eine Verdampfereinheit, in der zwei getrennte erste und zweite Stufen zur Verdampfung von zwei unterschiedlichen Reaktand-Massenströmen vorgesehen sind,
- Fig. 3a: einen vertikalen Schnitt einer Verdampfereinheit, bei der die Zu- und Abströmleitungen an einer Endplatte angeordnet sind,
- Fig. 3b: eine Reaktionsfolie einer Verdampfereinheit gemäß Fig. 3a,
- Fig. 3c: eine Wärmeträgerfolie einer Verdampfereinheit gemäß Fig. 3a und
- Fig. 4a-c: Verschaltungsvarianten für eine Verdampfereinheit, bei der aus zwei flüssigen Reaktand-Massenströmen ein Gasgemisch hergestellt wird, zeigt.

Die in der Zeichnung insgesamt mit 1 bezeichnete Verdampfereinheit besteht aus einer Vielzahl von Reaktionsfolien 2 und Wärmeträgerfolien 3, die abwechselnd aufeinandergestapelt und zwischen zwei Endplatten 4 angeordnet sind. In die Reaktionsfolien 2 sind Reaktionskanäle 5-7 eingebracht, die sich auf zwei Stufen 8, 9 aufteilen. Die erste Stufe 8 wird gebildet durch einen ersten Kanal 5, der sich unmittelbar an eine Zuströmleitung 10 für den Reaktand-Massenstrom anschließt. An diese erste Stufe 8 schließt sich die zweite Stufe 9, die von einem Verteilerkanal 6 und einer Vielzahl davon abzweigender Reaktionskanäle 7 gebildet wird, an die erste Stufe 8 an. Der erste Kanal 5 und der Verteilerkanal 6, die jeweils eine konstante Querschnittsfläche aufweisen und parallel zueinander verlaufen, sind im Bereich einer Seite 11 der Reaktionsfolie 2 angeordnet. Auf der dem ersten Kanal 5 abgewandten Seite zweigen mehrere Reaktionskanäle 7, die sich bis zu einer der ersten Seite 11 der Reaktionsfolie 2 gegenüberliegenden Seite 12 erstrecken, in senkrechter Richtung vom Verteilerkanal 6 ab. Der Gesamtströmungsquerschnitt der zweiten Stufe 9 nimmt somit mit jedem abzweigenden Reaktionskanal 7 zu.

In die Wärmeträgerfolie 3 ist ein Verteilerkanal 13 für das Wärmeträgermedium, der über eine Vielzahl von Wärmeträgerkanälen 14 mit einem Sammelkanal 15 verbunden ist, eingebracht. Der Verteilerkanal 13 und der Sammelkanal 15, die gegenüber den Wärmeträgerkanälen 14 einen vergrößerten Strömungsquerschnitt aufweisen, verlaufen parallel zu den gegenüberliegenden Seiten 16, 17 der Wärmeträgerfolie 3, wobei die Wärmeträgerkanäle 14 sich im wesentlichen senkrecht zu den Seiten 16, 17 zwischen dem Verteilerkanal 13 und dem Sammelkanal 15 erstrecken. Der Verteilerkanal 13 und der Sammelkanal 15 sind wiederum über Mündungsöffnungen 20, 21 jeweils mit der Zuströmleitung 23 und Abströmleitung 24 verbunden.

Die Reaktionsfolien 2 und Wärmeträgerfolien 3 werden abwechselnd aufeinandergestapelt und abschließend mit Endplatten 4 versehen. Zur Bildung einer Verdampfereinheit 1 werden die Folien 2, 3 dann beispielsweise mit Hilfe eines Diffusionsschweißverfahrens oder durch Löten miteinander verbunden. Hierbei werden die Folien 2, 3 so gestapelt, daß die Seiten 11, 12 der Reaktionsfolien den Seiten 16, 17 der Wärmeträgerfolien zugeordnet sind. Dies führt dazu, daß die Reaktionskanäle 7 parallel zu den Wärmeträgerkanälen 14 und der Sammelkanal 15 parallel zum ersten Kanal 5 verlaufen. Als Variante hierzu ist es auch möglich, den ersten Kanal 5 im Kreuzstrom zum Wärmeträgermedium zu führen. Außerdem liegen die Mündungsöffnungen 18-21 der ersten Kanäle 5, der Reaktionskanäle 7, der Verteilerkanäle 13 und der Sammelkanäle 15 jeweils entlang einer Linie, die senkrecht zur Folienebene verläuft.

Zur Zufuhr des Reaktand-Massenstroms ist eine Zuströmleitung 10, die sich über den Bereich aller Mündungsöffnungen 18 der ersten Kanäle 5 erstreckt, vorgesehen. Zusätzlich ist zur anschließenden Abfuhr des Reaktand-Massenstroms eine Abströmleitung 22, die sich über die gesamte Seitenfläche 12, 17 der Verdampfereinheit 1 erstreckt, angeordnet. Für die Zu- und Abfuhr des Wärmeträgermediums sind entsprechende Zuström- und Abströmleitungen 23, 24 an der Verdampfereinheit 1 angeordnet. Um eine ordnungsgemäße Zu- beziehungsweise Abfuhr des Reaktand-Massenstroms und des Wärmeträgermediums zu gewährleisten, muß bei der Anordnung der Kanäle 5-7, 13-15 in den Folien 2, 3 darauf geachtet werden, daß sich die Mündungsöffnungen 18-21 in verschiedenen Bereichen der Verdampfereinheit 1 befinden.

Durch die erfindungsgemäße Verwendung eines einzigen ersten Kanals 5 oder zumindest nur weniger paralleler Kanäle pro Reaktionsfolie kann der Stutzen zwischen Zuströmleitung 10 und Mündungsöffnung 18 für den Reaktand-Massenstrom relativ schmal ausgeführt werden. Dadurch verringert sich das freie Volumen für die Flüssigkeit, so daß sich eine bessere Dynamik bei Lastwechseln ergibt. Ein großes freies Volumen hätte zur Folge, daß beispielsweise bei einer schlagartigen Verringerung der Lastanforderung trotz Reduzierung der zugeführten Flüssigkeitsmenge die produzierte Dampfmenge erst dann verringert, wenn die Flüssigkeit, die sich im freien Volumen befindet, verdampft ist. Dies würde bedeuten, daß sich das Ansprechverhalten und somit die Dynamik der Verdampfereinheit 1 verschlechtern würde.

Für die Verdampfereinheit 1 werden vorzugsweise dünne Folien 2, 3 mit sehr fein strukturierten Kanälen 5-7, 13-15 verwendet, wobei die Tiefe der Kanäle 5-7, 13-15 in einem Bereich unter 400 µm liegt. Die breite der Kanäle 5-7, 13-15 sollte vorzugsweise weniger als 1000µm, im Falle des zu verdampfenden Fluids sogar weniger als 400 µm betragen. Als kleinste sinnvolle Breite beziehungsweise Tiefe sind wegen der Verstopfungsgefahr jeweils etwa 80µm anzusehen. Zur Herstellung solch feiner Kanäle wird vorzugsweise ein Ätzverfahren, das weiter unten ausführlich beschrieben wird, verwendet. Bei einer solchen Anordnung kann das Wärmeträgermedium mit einer Temperatur, die um mehr als 100 K über der Verdampfungstemperatur des Reaktanden liegt, zugeführt werden, ohne das sich die Wärmeübergangszahl drastisch reduziert. Da sich durch die hohen Wärmeübergangszahlen sowohl die benötigte Austauschfläche reduziert, als auch bedingt durch die dünnen Folien die Austauschfläche pro Volumeneinheit erhöht, kann somit eine insgesamt sehr kompakte Bauweise realisiert werden. Zusätzlich wird durch die feinen Kanäle das freie Volumen in der Verdampfereinheit 1 reduziert und somit die Dynamik verbessert.

Eine weitere Verbesserung der Dynamik bewirkt das zweistufige Konzept der Verdampfereinheit 1. Hierbei wird zumindest bei Vollast in der ersten Stufe 8 nur ein Teil des Reaktand-Massenstroms verdampft. Diese Verdampfung erfolgt mit sehr hohen Wärmeübergangszahlen und erzeugt bei Vollast eine 2-Phasen-Strömung mit einem auf das Volumen bezogenen sehr hohen Gasanteil. In der ersten Stufe 8 ist weiterhin nur ein sehr geringer Flüssigkeitsanteil vorhanden, da das verfügbare Volumen klein ist. Die erste Stufe 8 bestimmt somit weitgehend die Dynamik der Verdampfereinheit 1. Mit nun erhöhter Strömungsgeschwindigkeit wird der Reaktand-Massenstrom dann in die zweite Stufe 9 geleitet. Hier wird dann der Rest der Flüssigkeit verdampft und überhitzt, so daß ein tropfenfreies Gas die Verdampfereinheit 1 verläßt. Durch diesen zweistufigen Ansatz können die erste und zweite Stufe 8, 9 bezüglich der Geometrie und damit hinsichtlich Druckverlust, Wärmeübergangseigenschaften und Dynamik optimiert werden.

Die Herstellung der Folien 2, 3 kann mit Hilfe eines ansich bekannten Ätzverfahrens erfolgen. Hierbei werden Metallfolien auf die gewünschte Größe zugeschnitten und mit einer Schutzschicht aus Lack versehen. Auf diesen Lack werden dann die gewünschten Strukturen, beispielsweise auf photochemischer Basis, aufgebracht. Bei einem anschließenden Ätzvorgang werden dann nur diese belichteten Bereiche des Lackes aufgelöst und an diesen Stellen dann die Kanalstruktur in die Metallfolien eingebracht, wobei die Kanaltiefe durch die Einwirkdauer des Ätzbades bestimmt wird. Als abschließender Verfahrensschritt wird dann die verbleibende Lackschicht von der Metallfolie entfernt. Die so hergestellten Folien 2, 3 werden dann aufeinandergestapelt und wie bereits weiter oben beschrieben durch Diffusionsschweißen oder Löten zu einer Verdampfereinheit 1 verbunden.

Das Ätzverfahren hat den Vorteil, daß nahezu beliebige Kanalstrukturen in die Folien 2, 3 eingebracht werden können. So können beispielsweise auch Kanäle 5-7, 13-15 mit veränderlichem Strömungsquerschnitt hergestellt werden. Dadurch kann die Querschnittserweiterung in Strömungsrichtung, die zur Anpassung der Strömungsverhältnisse an die starke Volumenvergrößerung beim Verdampfen benötigt wird, in der zweiten Stufe 9 durch die beschriebene Erhöhung der Kanalzahl und/oder durch eine Erweiterung des Kanalquerschnitts erreicht werden. Über das Ätzverfahren können zwar nicht so saubere Geometrien, wie beispielsweise über ein Drehverfahren, hergestellt werden; dies ist jedoch für die Verdampfereinheit 1 von untergeordneter Bedeutung.

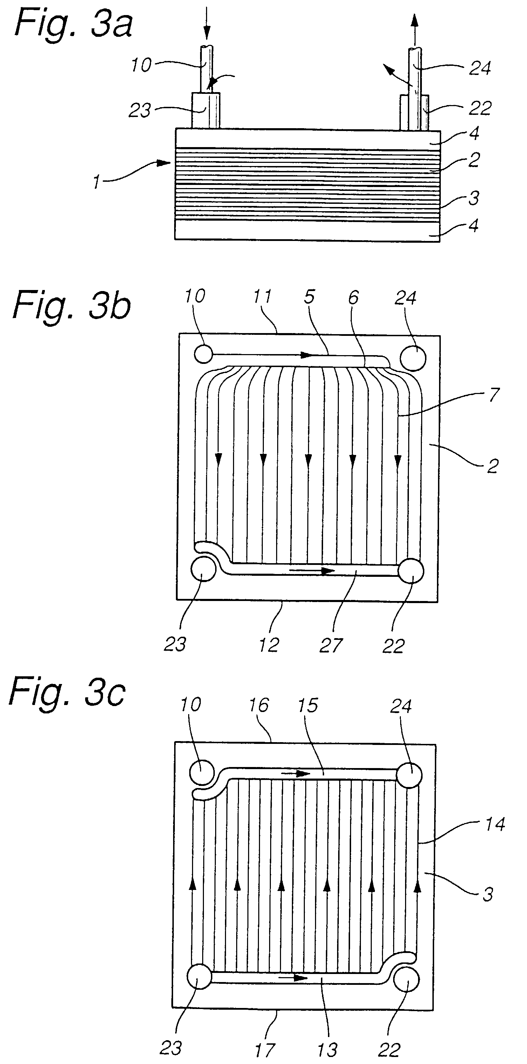

Weiterhin kann durch die variable Kanalstruktur der Ort der Zubeziehungsweise Abströmleitungen 10, 22-24 individuell festgelegt werden. Bei Verwendung eines Verteiler- beziehungsweise Sammelkanals 6, 27, 13, 15 können außerdem die Anschlußstutzen der Zu- beziehungsweise Abströmleitungen 10, 22-24 relativ schmal ausgeführt werden, so daß das freie Volumen reduziert und dadurch die Dynamik verbessert wird. Als weiterer Vorteil ist anzusehen, daß durch die variable Kanalstruktur die Verdampfereinheit 1 je nach Anforderung in Parallel-, Gegen-, oder Kreuzstrombauart oder gegebenenfalls in einer Mischform dieser Bauarten ausgeführt werden kann. Zusätzlich können auch beide Stufen 8, 9 und gegebenenfalls auch ein oder mehrere Stufen 8, 9 für unterschiedliche Reaktand-Massenströme in einer Reaktionsfolie 2 oder durch abwechselndes Einfügen der jeweiligen Reaktionsfolien 2 zumindest in einer Verdampfereinheit 1 integriert werden. Schließlich kann auch die Anordnung der Zu- und Abströmleitungen 10, 22-24 den Anforderungen individuell angepaßt werden, wobei die Anschlüsse auf weniger als vier Seiten - bestenfalls sogar auf nur einer Seite - der Verdampfereinheit 1 oder, wie in den Fig. 3-4 gezeigt, auf einer oder auch auf beiden Endplatten 4 angeordnet werden kann.

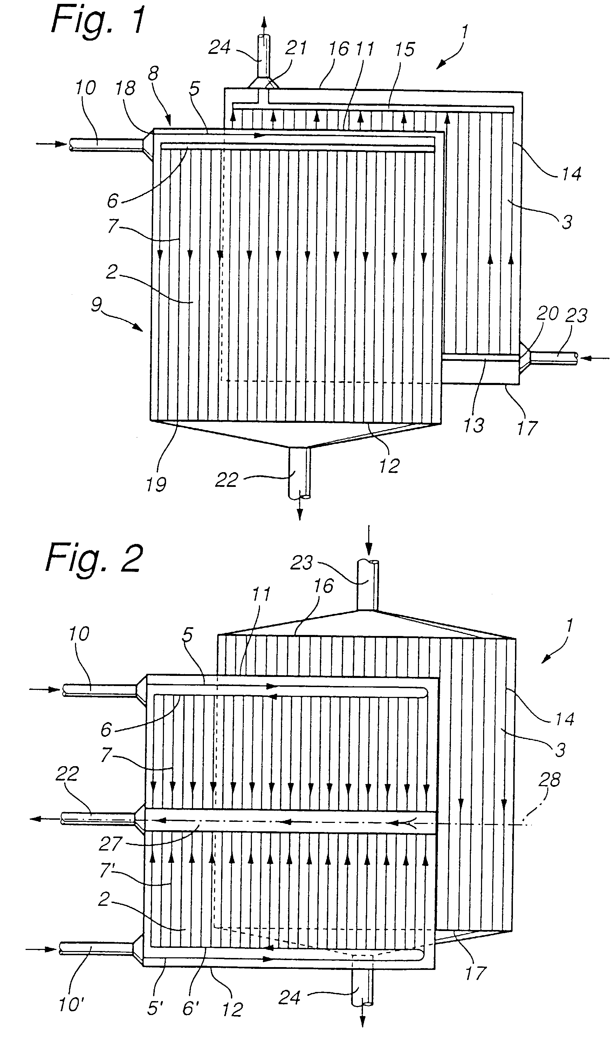

In Fig. 2 ist ein weiteres Ausführungsbeispiel für eine erfindungsgemäße Verdampfereinheit 1 gezeigt. Hierbei ist in der Wärmeträgerfolie 3 weder ein Verteilerkanal 13 noch ein Sammelkanal 15 vorgesehen. Stattdessen erstrecken sich die parallel verlaufenden Wärmeträgerkanäle 14 durchgehend von einer Seite 16 zur gegenüberliegenden Seite 17 der Wärmeträgerfolie 3, wobei sich in diesem Fall die Zuströmleitung 23 beziehungsweise Abströmleitung 24 über die gesamte Seite 17 beziehungsweise 16 erstreckt. Auf der Reaktionsfolie 2 sind im Gegensatz zu Fig. 1 zwei separate, spiegelsymmetrisch zu einer Mittelachse 28 der Reaktionsfolie 2 angeordnete Verdampferkreise integriert, wobei die Reaktionskanäle 7, 7' beider Verdampferkreise in einen gemeinsamen Sammelkanal 27, der sich entlang der Mittelachse 28 erstreckt, münden. Der Sammelkanal 27 ist wiederum mit einer Abströmleitung 22 für das Gasgemisch verbunden. Prinzipiell müssen die beiden Kanalsysteme (5-7, 5'-7') jedoch nicht identisch aufgebaut sein. Beispielsweise können die Reaktionskanäle (7, 7') zur Anpassung an den Energiebedarf zur Verdampfung des jeweiligen Fluids unterschiedlich lang sein.

Bei dieser Anordnung wird der Reaktand somit in den Reaktionskanälen 7, 7' des ersten beziehungsweise zweiten Kreises in paralleler beziehungsweise entgegengesetzter Richtung zum Wärmeträgermedium geführt. Die ersten Kanäle 5, 5' beider Kreise verlaufen jeweils quer zu den Wärmeträgerkanälen 14, wobei der erste Kanal 5 des ersten Kreises im Eintrittsbereich und der erste Kanal 5' des zweiten Kreises im Austrittsbereich des Wärmeträgermediums angeordnet ist. Da somit der Wärmeübertrag im Bereich des ersten Kanals 5 des ersten Kreises höher ist, als im Bereich des ersten Kanals 5' des zweiten Kreises, liegt es auf der Hand, dem ersten Kreis den Reaktand, der die höhere Verdampfungstemperatur aufweist, zuzuführen.

Das Ausführungsbeispiel gemäß Fig. 3 zeigt einen zwischen Endplatten 4 angeordneten Folienstapel, wobei sich alle Zu- und Abströmleitungen 10, 22-24 für den Reaktand-Massenstrom und für das Wärmeträgermedium in einer Richtung senkrecht zur Folienebene durch den gesamten Folienstapel einschließlich oberer Endplatte 4 erstrecken. Mögliche Anordnungen der Kanalstruktur zeigen die Fig. 3b und 3c, wobei die Reaktions- beziehungsweise Wärmeträgerkanäle 7, 14 so angeordnet sind, daß sie keine Strömungsverbindung zu den Zu- und Abströmleitungen 10, 22-24 für den Wärmeträger beziehungsweise für den Reaktand-Massenstrom aufweisen. Die Kanalstrukturen entsprechen mit Ausnahme der Zu- und Abströmleitungen 10, 22-24 im wesentlichen dem Ausführungsbeispiel gemäß Fig. 1, wobei in der Reaktionsfolie 2 ein zusätzlicher Sammelkanal 27 für den Reaktand-Massenstrom vorgesehen ist.

Zusätzlich zu den hier beschriebenen Ausführungsbeispielen ist es außerdem möglich, weitere Stufen beziehungsweise Kreise in eine Reaktionsfolie 2 zu integrieren, beziehungsweise Reaktionsfolien 2 mit unterschiedlichen Kreisen oder Stufen in einen gemeinsamen Folienstapel zu integrieren. Außerdem wird darauf hingewiesen, daß die gezeigten Kanalstrukturen nur die prinzipielle Anordnung zeigen. Der genaue Verlauf der Kanalstrukturen kann jeweils hinsichtlich Druckverlust, Wärmeübertrag und Dynamik optimiert werden.

Ein bevorzugtes Anwendungsbeispiel für eine solche Verdampfereinheit ist die Verdampfung von Wasser und/oder Methanol in Brennstoffzellensystemen für mobile Anwendungen, beispielsweise für den Einsatz in Kraftfahrzeugen. Hierzu werden vorzugsweise Brennstoffzellen mit protonenleitenden Elektrolytmembranen, sogenannte PEM-Brennstoffzellen, verwendet, wobei der hierfür benötigte Wasserstoff im Fahrzeug durch Wasserdampfreformierung oder partielle Oxidation erzeugt wird. Bei beiden Prozessen ist es notwendig, die Flüssigkeit vor dem Eintritt in den Reformer zu verdampfen und auf ungefähr 250° C zu überhitzen. Bei der Wasserdampfreformierung werden Wasser- und Methanoldampf typischerweise im Molverhältnis 1:1 bis 2:1 benötigt, während bei der partiellen Oxidation reiner Methanoldampf verwendet wird. Da jedoch Mischformen aus beiden Reaktionen realisiert werden können, muß generell ein Gasgemisch mit einem Molverhältnis von 0-2 Teilen Wasserdampf zu einem Teil Methanolgas hergestellt werden. Als Wärmeträgermedium wird hierbei beispielsweise flüssiges Thermoöl mit einer Eintrittstemperatur von 200-300° C verwendet.

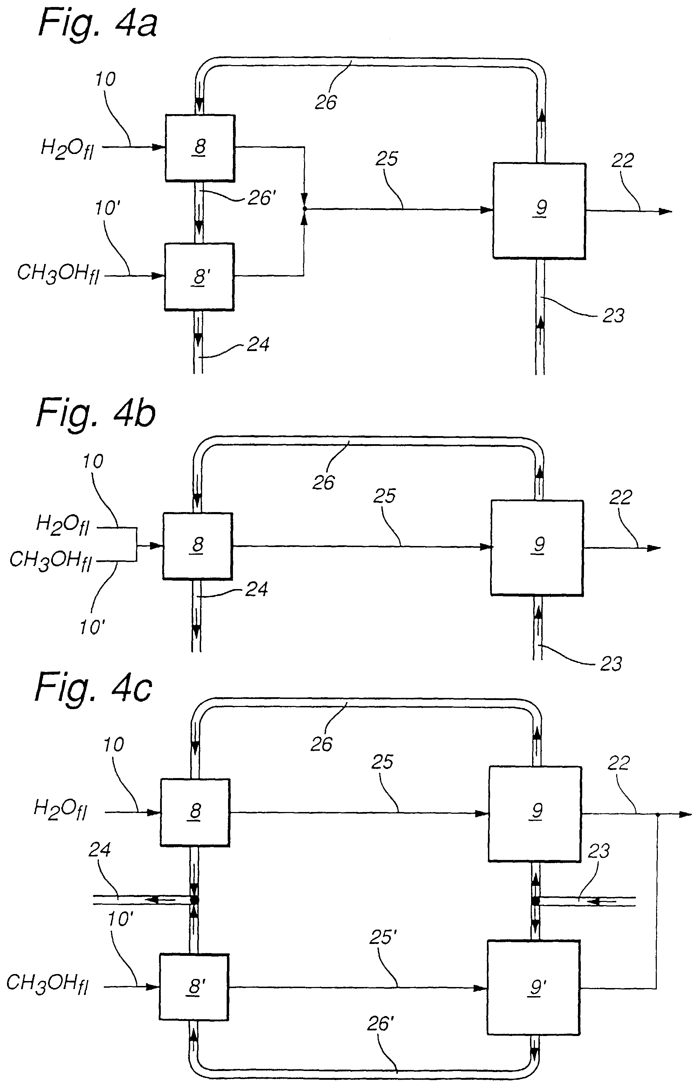

Die prinzipiellen Verschaltungsvarianten für eine Verdampfereinheit, mit der ein Wasserdampf/Methanolgasgemisch für ein Brennstoffzellensystem erzeugt werden kann, sind in Fig. 4 dargestellt. In Fig. 4a werden zwei getrennte erste Stufen 8, 8', denen über getrennte Zuströmleitungen 10, 10' das flüssige Wasser beziehungsweise Methanol zugeführt wird, verwendet. Bei größeren Lasten ist die Verdampfung in den jeweils ersten Stufen 8, 8' nicht vollständig, so daß jeweils ein Flüssigkeits/Gasgemisch aus den ersten Stufen 8, 8' austritt und erst anschließend vermischt wird. Dieses 2-Stoff/2-Phasengemisch wird dann anschließend über eine Transferleitung 25 für den Reaktand-Massenstrom einer gemeinsamen zweiten Stufe 9 zugeführt, restlos verdampft und überhitzt und schließlich über die Abströmleitung 22 abgeführt. Das Wärmeträgermedium wird vorzugsweise zunächst über die Zuströmleitung 23 der zweiten Stufe und erst anschließend über Transferleitungen 26, 26' den beiden ersten Stufen 8, 8' zugeführt. Neben dieser seriellen Anordnung können die beiden ersten Stufen 8, 8' auch parallel vom Wärmeträgermedium beaufschlagt werden.

Bei der zweiten Schaltungsvariante gemäß Fig. 4b werden die beiden Flüssigkeiten im Gegensatz zur Anordnung in Fig. 4a bereits vor dem Eintritt in die gemeinsame erste Stufe 8 vermischt. Das hierbei entstehende 2-Stoff/2-Phasengemisch wird dann anschließend der gemeinsamen zweiten Stufe 9 zugeführt. Das Wärmeträgermedium wird dabei wiederum seriell durch die beiden Stufen 8, 9 geführt.

Fig. 4c zeigt schließlich eine Schaltungsvariante, bei der jeweils separate erste und zweite Stufen 8, 8', 9, 9' verwendet werden. Hierbei wird sowohl das Wasser als auch das Methanol für sich allein vollständig verdampft und überhitzt und erst anschließend in der Abströmleitung 22 vermischt. Für die Führung des Wärmeträgermediums sind wiederum mehrere Varianten möglich, wobei im Ausführungsbeispiel das Wärmeträgermedium auf zwei parallele Zweige für das Wasser und für das Methanol aufgeteilt wird, wobei in jedem Zweig jeweils die beiden zweiten und ersten Stufen 9, 9' ,8 , 8' seriell durchströmt werden.

Für die gezeigten Schaltungsvarianten besteht die Möglichkeit, sowohl für die ersten und zweiten Stufen 8, 8', 9, 9' jeweils separate Verdampfereinheiten 1 einzusetzen, als auch mehrere Stufen 8, 8', 9, 9' in einer Folie 2,3 oder zumindest in einem Folienstapel zu integrieren. So entspricht beispielsweise die in Fig. 2 gezeigte Verdampfereinheit 1 einer Schaltungsanordnung, wie sie in Fig. 4c gezeigt ist, wobei hierbei alle ersten und zweiten Stufen 8, 8', 9, 9' in einer Reaktionsfolie 2 integriert sind. Werden für die erste und zweite Stufe 8, 9 separate Verdampfereinheiten dampfereinheiten 1 verwendet, so sollte die erste 1 ein sehr kleines aktives Volumen, beispielsweise im Bereich von 1 cm³, aufweisen.

## Patentansprüche

1. Verdampfereinheit (1) zum Überführen eines in Abhängigkeit einer Lastvorgabe einstellbaren flüssigen Reaktand-Massenstromes in einen gasförmigen Reaktand-Massenstrom, wobei die Verdampfereinheit (1) durch abwechselndes Aufeinanderstapeln von Folien (3) mit Wärmeträgerkanälen (13-15) und von Folien (2) mit Reaktionskanälen (5-7) gebildet ist, wobei der Flüssigkeitsstrom über eine Zuströmleitung (10) zugeführt, in der Verdampfereinheit (1) verdampft und über eine Abströmleitung (22) abgeführt wird, und wobei die Querschnittsfläche der Reaktionskanäle (5-7) in Strömungsrichtung zunimmt,
**dadurch gekennzeichnet**,
daß jeweils zumindest eine erste Verdampferstufe (8) und eine zweite Verdampferstufe (9) in einer Folie (2) mit Reaktionskanälen integriert sind, wobei die erste Stufe (8) als ein erster Reaktionskanal (5, 5') mit geringer Querschnittsfläche ausgebildet ist, der sich direkt an die Zuführleitung (10) anschließt und sich im wesentlichen über die gesamte Breite der Folie (2) quer zur Strömungsrichtung des Wärmeträgers in den Folien (3) mit Wärmeträgerkanälen erstreckt, und wobei die zweite Stufe (9) einen Verteilerkanal (6), der sich an den ersten Kanal (5) anschließt, sowie mehrere zweite Reaktionskanäle (7, 7') aufweist, die vom Verteilerkanal (10) abzweigen und deren Gesamtquerschnittsfläche größer ist als die Querschnittsfläche des ersten Kanals (5, 5').

2. Verdampfereinheit nach Anspruch 1,
**dadurch gekennzeichnet**,
daß der Strömungsquerschnitt zumindest eines zweiten Reaktionskanals (7) in Strömungsrichtung zunimmt.

3. Verdampfereinheit nach Anspruch 1,
**dadurch gekennzeichnet**,
daß die Reaktions- und/oder Wärmeträgerkanäle (5-7, 13-15) einen im Verhältnis zur Kanallänge geringen Querschnitt aufweisen.

4. Verdampfereinheit nach Anspruch 1,
**dadurch gekennzeichnet**,
daß der erste Reaktionskanal (5) und der Verteilerkanal (6) im wesentlichen parallel angeordnet und in entgegengesetzter Richtung vom Reaktand-Massenstrom durchströmt werden und daß die zweiten Reaktionskanäle (7) in Querrichtung vom Verteilerkanal (6) abzweigen.

5. Verdampfereinheit nach Anspruch 1,
**dadurch gekennzeichnet**,
daß die Wärmeträgerkanäle (14) in der Folie (3) im wesentlichen parallel angeordnet sind und daß die Folien (2, 3) so angeordnet sind, daß der Reaktand-Massenstrom in den zweiten Reaktionskanälen (7) im Gleich- oder im Gegenstrom zum Wärmeträgermedium geführt ist.

6. Verdampfereinheit nach Anspruch 1,
**dadurch gekennzeichnet**,
daß die Wärmeträgerkanäle (14) in den Folien (3) im wesentlichen parallel angeordnet sind und daß die Folien (2, 3) so angeordnet sind, daß der Reaktand-Massenstrom im ersten Reaktionskanal (5) im Querstrom zum Wärmeträgermedium geführt ist.

7. Verdampfereinheit nach Anspruch 5 oder 6,
**dadurch gekennzeichnet**,
daß ein quer zu den Wärmeträgerkanälen (14) verlaufender Verteiler- und/oder Sammelkanal (13, 15) vorgesehen ist.

8. Verdampfereinheit nach Anspruch 1,
**dadurch gekennzeichnet**,
daß jeweils Folien (2) mit Reaktionskanälen (5-7) zum Verdampfen unterschiedlicher Reaktand-Massenströme in einem gemeinsamen Folienstapel integriert sind.

9. Verdampfereinheit nach Anspruch 8,
**dadurch gekennzeichnet**,
daß die Reaktand-Massenströme vor dem ersten Reaktionskanal (5) vermischt und in den zweiten Reaktionskanälen (5-7) verdampft werden.

10. Verdampfereinheit nach Anspruch 8,
**dadurch gekennzeichnet**,
daß der erste Reaktionskanal (5), der Verteilerkanal (6) und die zweiten Reaktionskanäle (7) für die Reaktand-Massenströme jeweils in getrennten Folien (2) angeordnet sind.

11. Verdampfereinheit nach Anspruch 8,
**dadurch gekennzeichnet**,
daß jeweils der erste Reaktionskanal (5), der Verteilerkanal (6) und die zweiten Reaktionskanäle (7) für mehrere Reaktand-Massenströme gemeinsam in einer Folie (2) angeordnet sind.

12. Verdampfereinheit nach Anspruch 11,
**dadurch gekennzeichnet**,
daß für die beiden Reaktand-Massenströme jeweils separate erste Reaktionskanäle (5, 5') und ein gemeinsamer Verteilerkanal (6) beziehungsweise zweite Reaktionskanäle (7) vorgesehen sind.

13. Verdampfereinheit nach Anspruch 11,
**dadurch gekennzeichnet**,
daß ein im wesentlichen parallel zu einer Mittelachse (28) der Folie (2) verlaufender Sammelkanal (27) vorgesehen ist, daß auf gegenüberliegenden Seiten des Sammelkanals (27) jeweils ein Kanalsystem (5-7, 5'-7') für unterschiedliche Reaktand-Massenströme angeordnet ist und daß die zweiten Reaktionskanäle (7, 7') beider Kanalsysteme (5-7, 5'-7') in den Sammelkanal (27) münden.

14. Verfahren zur Herstellung einer Verdampfereinheit nach Anspruch 1,
**dadurch gekennzeichnet**,
daß die Reaktions- beziehungsweise Wärmeträgerkanäle (5-7, 13-15) mit Hilfe eines Ätzverfahrens in die Folien (2, 3) eingebracht werden, daß die Folien (2, 3) abwechselnd aufeinandergestapelt, mit Endplatten (4) versehen und anschließend durch Diffusionsschweißen oder Löten zu einer Verdampfereinheit (1) verbunden und schließlich mit Rohrleitungsanschlüßen (10, 22-24) versehen werden.

## Claims

1. Evaporator unit (1) for converting a liquid reactand mass flow adjustable as a function of a load presetting into a gaseous reactand mass flow, the evaporator unit (1) being formed by the alternating stacking one on the other of foils (3) having heat-exchange channels (13-15) and of foils (2) having reaction channels (5-7), the liquid flow being supplied via an inflow conduit (10), being evaporated in the evaporator unit (1), and being discharged via a flow-off conduit (22), and the cross-sectional area of the reaction channels (5-7) increasing in the direction of flow, characterized in that, in each case, at least one first evaporator stage (8) and one second evaporator stage (9) are integrated in a foil (2) having reaction channels, the first stage (8) being designed as a first reaction channel (5,5') with a small cross-sectional area, which is directly connected to the inflow conduit (10) and extends essentially over the entire width of the foil (2), transversly to the direction of flow of the heat transfer medium in the foils (3) with heat-exchange channels, and the second stage (9) having a distributor channel (6), which is connected to the first channel (5), and a plurality of second reaction channels (7,7') which branch off from the distributor channel (10) and the total cross-sectional area of which is larger than the cross-sectional area of the first channel (5,5').

2. Evaporator unit according to Claim 1, characterized in that the flow cross-section at least of one second reaction channel (7) increases in the direction of flow.

3. Evaporator unit according to Claim 1, characterized in that the reaction and/or heat-exchange channels (5-7, 13-15) have a cross-section which is small in relation to the channel length.

4. Evaporator unit according to Claim 1, characterized in that the first reaction channel (5) and the distributor channel (6) are arranged essentially parallel and the reactand mass flow flows through them in the opposite direction, and in that the second reaction channels (7) branch off from the distributor channel (6) in the transverse direction.

5. Evaporator unit according to Claim 1, characterized in that the heat-exchange channels (14) in the foil (3) are arranged essentially parallel, and in that the foils (2, 3) are arranged in such a way that the reactand mass flow in the second reaction channels (7) is guided in co-current or in countercurrent to the heat-exchange medium.

6. Evaporator unit according to Claim 1, characterized in that the heat-exchange channels (14) in the foils (3) are arranged essentially parallel, and in that the foils (2, 3) are arranged in such a way that the reactand mass flow in the first reaction channel (5) is guided in cross-current to the heat-exchange medium.

7. Evaporator unit according to Claim 5 or 6, characterized in that a distributor and/or collecting channel (13, 15) running transversely relative to the heat-exchange channels (14) is provided.

8. Evaporator unit according to Claim 1, characterized in that, in each case, foils (2) with reaction channels (5-7) for evaporating different reactand mass flows are integrated in a common foil stack.

9. Evaporator unit according to Claim 8, characterized in that the reactand mass flows are mixed upstream of the first reaction channel (5) and are evaporated in the second reaction channels (5-7).

10. Evaporator unit according to Claim 8, characterized in that the first reaction channel (5), the distributor channel (6) and the second reaction channels (7) for the reactand mass flows are in each case arranged in separate foils (2).

11. Evaporator unit according to Claim 8, characterized in that in each case the first reaction channel (5), the distributor channel (6) and the second reaction channels (7) for a plurality of reactand mass flows are arranged together in one foil (2).

12. Evaporator unit according to Claim 11, characterized in that in each case separate first reaction channels (5, 5') and a common distributor channel (6) or second reaction channels (7) are provided for the two reactand mass flows.

13. Evaporator unit according to Claim 11, characterized in that a collecting channel (27) running essentially parallel to a mid-axis (28) of the foil (2) is provided, in that a channel system (5-7, 5'-7') for different reactand mass flows is arranged in each case on opposite sides of the collecting channel (27), and in that the second reaction channels (7, 7') of the two channel systems (5-7, 5'-7') open into the collecting channel (27).

14. Method for the production of an evaporator unit according to Claim 1, characterized in that the reaction and heat-exchange channels (5-7, 13-15) are made in the foils (2, 3) by means of an etching method, and in that the foils (2, 3) are stacked alternately one on the other, provided with end plates (4), subsequently connected by diffusion welding or soldering to form an evaporator unit (1) and finally provided with pipe-conduit connections (10, 22-24).

## Revendications

1. Module de vaporisation (1) destiné à transformer un flux massique de réactant liquide, réglable en fonction d'une charge définie, en flux massique de réactant gazeux, le module de vaporisation (1) étant constitué par un empilage alternatif de feuilles (3) contenant des canaux pour agent caloporteur (13 - 15) et de feuilles (2) contenant des canaux de réaction (5 - 7), le flux liquide étant acheminé par une conduite d'admission (10), vaporisé dans le module de vaporisation (1) et évacué par l'intermédiaire d'une couduite d'évacuation (22), et la surface de la section des canaux de réaction (5 - 7) augmentant dans le sens du flux,
caractérisé en ce qu'au moins un premier niveau de vaporisation (8) et un deuxième niveau de vaporisation (9) sont intégrés dans chaque feuille (2) contenant des canaux de réaction, le premier niveau (8) étant conçu comme un premier canal de réaction (5, 5') avec une faible surface de la section, qui communique directement avec la conduite d'admission (10) et s'étend sensiblement sur toute la largeur de la feuille (2), dans le sens transversal par rapport au sens du flux de l'agent caloporteur dans les feuilles (3) contenant des canaux pour agent caloporteur, et le deuxième niveau (9) étant muni d'un canal de distribution (6), qui communique directement avec le premier canal (5), ainsi que de plusieurs deuxièmes canaux de réaction (7, 7'), qui forment des embranchements à partir du canal de distribution (10) et dont la surface totale de leurs sections est supérieure à la surface de la section du premier canal (5, 5').

2. Module de vaporisation selon la revendication 1, caractérisé en ce que la section de passage d'au moins un deuxième canal de réaction (7) augmente dans le sens du flux.

3. Module de vaporisation selon la revendication 1, caractérisé en ce que les canaux de réaction et/ou les canaux pour agent caloporteur (5-7, 13-15) présentent une faible section par rapport à la longueur des canaux.

4. Module de vaporisation selon la revendication 1, caractérisé en ce que le premier canal de réaction (5) et le canal de distribution (6) sont sensiblement parallèles et traversés en sens inverse par le flux massique de réactant et en ce que les deuxièmes canaux de réaction (7) forment un embranchement dans le sens transversal à partir du canal de distribution (6).

5. Module de vaporisation selon la revendication 1, caractérisé en ce que les canaux pour agent caloporteur (14) sont sensiblement parallèles dans la feuille (3) et en ce que les feuilles (2, 3) sont disposées de telle sorte que le flux massique de réactant est acheminé dans les deuxièmes canaux de réaction (7) dans le même sens ou dans le sens inverse de l'agent caloporteur.

6. Module de vaporisation selon la revendication 1, caractérisé en ce que les canaux pour agent caloporteur (14) sont sensiblement parallèles dans les feuilles (3) et en ce que les feuilles (2, 3) sont disposées de telle sorte que le flux massique de réactant est acheminé dans le premier canal de réaction (5) dans le sens transversal par rapport à l'agent caloporteur.

7. Module de vaporisation selon la revendication 5 ou 6, caractérisé en ce qu'il est prévu de réaliser un canal de distribution et/ou un canal collecteur (13, 15) qui s'étend transversalement par rapport aux canaux pour agent caloporteur (14).

8. Module de vaporisation selon la revendication 1, caractérisé en ce que les feuilles (2) contenant des canaux de réaction (5 - 7) sont intégrées dans un empilage de feuilles commun destiné à la vaporisation de différents flux massiques de réactant.

9. Module de vaporisation selon la revendication 8, caractérisé en ce que les flux massiques de réactant sont mélangés en amont du premier canal de réaction (5) et sont vaporisés dans les deuxièmes canaux de réaction (5 - 7).

10. Module de vaporisation selon la revendication 8, caractérisé en ce que le premier canal de réaction (5), le canal de distribution (6) et les deuxièmes canaux de réaction (7) sont disposés pour les flux massiques de réactant dans des feuilles séparées (2).

11. Module de vaporisation selon la revendication 8, caractérisé en ce que le premier canal de réaction (5), le canal de distribution (6) et les deuxièmes canaux de réaction (7) sont tous disposés ensemble pour plusieurs flux massiques de réactant dans une même feuille (2).

12. Module de vaporisation, selon la revendication 11, caractérisé en ce qu'il est prévu de réaliser pour les deux flux massiques de réactant chaque fois des premiers canaux de réaction (5) séparés et un canal de distribution (6) commun ou des deuxièmes canaux de réaction (7) communs.

13. Module de vaporisation selon la revendication 11, caractérisé en ce qu'il est prévu de réaliser un canal collecteur (27) qui est sensiblement parallèle à un axe médian (28) de la feuille (2), en ce qu'un système de canaux (5-7, 5'-7') pour différents flux massiques de réactant est disposé chacun des deux côtés opposés du canal collecteur (27) et en ce que les deuxièmes canaux de réaction (7, 7') des deux systèmes de canaux (5-7, 5'-7') débouchent dans le canal collecteur (27).

14. Procédé de fabrication d'un module de vaporisation selon la revendication 1, caractérisé en ce que les canaux de réaction ou les canaux pour agent caloporteur (5-7, 13-15) sont insérés dans les feuilles (2, 3) à l'aide d'un procédé de gravure, en ce que les feuilles (2, 3) sont empilées alternativement, sont munies de plaques d'extrémité (4) et sont assemblées ensuite selon un procédé de soudage par diffusion ou un procédé de brasage pour former un module de vaporisation (1) et sont munies enfin avec des embouts de raccordement pour canalisations (10, 22-24).
